**Europäisches Patentamt**

**European Patent Office**

**Office européen des brevets**

(19)

(11) Veröffentlichungsnummer: **0 202 604**
**A1**

(12) # EUROPÄISCHE PATENTANMELDUNG

(21) Anmeldenummer: **86106587.8**

(22) Anmeldetag: **15.05.86**

(51) Int. Cl.⁴: **H 02 G 3/04**

(30) Priorität: **23.05.85 DE 8515183 U**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Rieth & Co. GmbH**
**Stuttgarter Strasse 128**
**D-7312 Kirchheim/Teck(DE)**

(72) Erfinder: **Grünert, Alfred, Dipl.-Ing.**
**Buchrain 4**
**CH-2562 Port(CH)**

(74) Vertreter: **Rüger, Rudolf, Dr.-Ing. et al,**
**Webergasse 3 Postfach 348**
**D-7300 Esslingen/Neckar(DE)**

(54) **Kabelpritsche oder -träger.**

(57) Ein Kabelpritsche oder ein Kabelträger besteht aus vertikalen, als Profilschienen mit wenigstens einem über die Länge durchlaufenden Flansch ausgebildeten Stielen und aus an diesen Stielen stufenlos verstellbaren und festklemmbaren horizontalen Auslegern, die zur Aufnahme von Kabeln oder dergl. oder einer leiterförmigen Kabelaufnahme eingerichtet sind. Jeder Ausleger trägt auf seiner dem Stiel zugewandten Stirnseite ein den Stiel teilweise umgreifendes Halteglied, das mittels eines zugeordneten Klemmstückes und eines Spannelementes mit dem Stiel verklemmbar ist.

Um die Länge der gegebenenfalls aus einem anderen Material wie Stahl bestehenden Ausleger entsprechend den jeweiligen Bedürfnissen an Ort und Stelle zweckentsprechend wählen zu können, ist die Anordnung derart getroffen, daß das Halteglied (16) als ein im Querschnitt im wesentlichen U-förmiger Bügel (17) ausgebildet ist, der mit seinen beiden Schenkeln (22) den Stiel (1) beidseitig umgreifend auf diesen aufsetzbar und an diesem geführt ist, wobei an diesem Bügel auf der den Schenkeln (22) abgewandten Seite eine den Ausleger (2) bildende Profilschiene stumpf anschließend befestigt ist und das Klemmstück (23) zwischen den beiden Schenkeln (22) liegend mit dem flansch (7) des Stiels (1) verklemmbar ist.

Fig. 1

- 1 -

0202604

8610658?·8

## Kabelpritsche oder -träger

Die Erfindung betrifft eine Kabelpritsche oder einen Kabelträger, bestehend aus vertikalen, als Profilschienen mit wenigstens einem über die Länge durchlaufenden Flansch ausgebildeten Stielen und aus an diesen stufenlos verstellbaren und festklemmbaren horizontalen Auslegern, die zur Aufnahme von Kabeln oder dergl. oder einer leiterförmigen Kabelauflage eingerichtet sind und von denen jeder aus einer dem Stiel zugewandten Stirnseite ein den Stiel teilweise umgreifendes Halteglied trägt, das mittels eines zugeordneten Klemmstückes und eines Spannelementes mit dem Stiel verklemmbar ist.

Bei einer aus der DE-PS 1162 444 bekannten Kabelpritsche dieser Art weisen die Stiele ein T- oder Doppel-T-Profil auf, während an die als Elechformteile ausgebildeten Ausleger stirnseitig ein hakenförmiges Halteglied angeschweißt ist, dessen Hakenteil den Flansch des zugeordneten Stieles auf einer Seite umgreift. Auf der gegenüberliegenden Seite ist an dem Ausleger ein im wesentlichen U-förmiges Klemmstück mit kurzen Schenkeln mittels einer Spannschraube seitlich derart befestigt, daß einer der Schenkel des Klemmstückes auf dem Ausleger abgestützt ist und der andere Schenkel den Flansch des Stieles auf der ihm zugewandten Seite übergreift.

0202604

Die Teile dieser in der Praxis bewährten Kabelpritsche sind aus Stahl gefertigt und in der Regel zum Korrosionsschutz feuerverzinkt. Die Herstellung der Ausleger aus Stahlblech mit den angeschweißten, hakenförmigen Haltegliedern ist aber verhältnismäßig aufwendig. Auch gibt es Einsatzfälle, bei denen es mit Rücksicht auf das Gewicht oder bei der Aufstellung der Kabelpritsche in einer die Verzinkung oder den Stahl angreifenden Atmosphäre erwünscht wäre, für die Kabelpritsche ein anderes Material wie Stahl zu benutzen. Die Verwendung anderer Materialien ist aber konstruktionsbedingt nicht ohne weiteres möglich. Schließlich müssen die Ausleger immer in vorbestimmten Längen hergestellt werden, was bedeutet, daß für unterschiedlich breite, leiterförmige Kabelauflagen auch Ausleger unterschiedlicher Länge auf Vorrat gehalten werden müssen.

Aufgabe der Erfindung ist es deshalb, eine Kabelpritsche oder einen Kabelträger zu schaffen, der bzw. die sich bei hoher Belastbarkeit, einfacher Herstellung und leichter Montagemöglichkeit dadurch auszeichnet, daß auch andere Materialien als Stahl zur Herstellung verwendet werden können, wobei gleichzeitig die Länge der Ausleger entsprechend den jeweiligen Bedürfnissen an Ort und Stelle zweckentsprechend gewählt werden kann.

Zur Lösung dieser Aufgabe ist erfindungsgemäß die Anordnung derart getroffen, daß das Halteglied als ein im Querschnitt im wesentlichen

0202604

U-förmiger Bügel ausgebildet ist, der mit seinen beiden Schenkeln den Stiel beidseitig umgreifend auf diesen aufsetzbar und an diesem geführt ist und an dem auf der den Schenkeln abgewandten Rückseite eine den Ausleger bildende Profilschiene stumpf anschließend befestigt ist und daß das Klemmstück zwischen den beiden Schenkeln liegend mit dem Flansch des Stieles verklemmbar ist.

Das U-förmige Halteglied gewährleistet eine einfache Montage, wobei durch die beiden Schenkel eine einwandfreie seitliche Führung des Haltegliedes auf dem zugeordneten Stiel gewährleistet ist, die ein seitliches Verkanten selbsttätig ausschließt. Das zwischen den Schenkeln liegende Klemmstück gewährleistet eine sichere Fixierung des Haltegliedes und damit des Auslegers auf dem Stiel. Da der Ausleger durch eine Profilschiene gebildet ist, die in beliebiger Länge abgelängt werden kann, kann er ohne weiteren Aufwand an die jeweiligen Bedürfnisse angepaßt werden.

Gleichzeitig können alle Teile der Kabelpritsche aus praktisch beliebigen, zweckentsprechenden Materialien hergestellt werden, soweit diese die notwendige Festigkeit aufweisen.

Dabei ist es insbesondere vorteilhaft, wenn zumindest die Ausleger und die Halteglieder - sowie gegebenenfalls auch die Stiele - aus einem extrudierbaren Material bestehen und

0202604

stranggepreßt sind, das zweckmäßigerweise ein Leichtmetall, aber auch ein Kunststoffmaterial sein kann. Aus den stranggepreßten Teilen können die Elemente der Kabelpritsche bzw. des Kabelträgers durch einfaches Abtrennen entsprechende Abschnitte hergestellt werden. Diese Abschnitte bedürfen, abgesehen von dem Bohren einiger zur Aufnahme des Spannelementes oder von Verbindungselementen erforderlicher Löcher keiner weiteren Nachbearbeitung mehr.

Sehr einfache konstruktive Verhältnisse ergeben sich insbesondere dann, wenn der Stiel als Hohlprofil mit wenigstens einer über die Länge durchlaufenden Kammer ausgebildet ist, in die ein Längsschlitz führt, wobei die Kammer vorzugsweise im wesentlichen rechteckig ist und der Längsschlitz durch zwei in einer gemeinsamen Ebene liegende Flansche begrenzt ist. Ein solcher Stiel kann auch zwei durch einen Steg miteinander verbundene Gurte aufweisen, von denen jeder eine Kammer der erwähnten Art enthält. Dadurch wird nicht nur eine erhöhte Biegesteifigkeit und Belastbarkeit der Stiele erzielt, sondern auch die Möglichkeit eröffnet, einen der Gurte zur Befestigung des Stieles an einer Wand oder dergl. unter Verwendung von Wandankern zu benutzen, die durch den entsprechenden Längsschlitz in die zugeordnete Kammer greifen und gegen deren Flansche abgestützt sind.

Das Klemmstück ist mit Vorteil in Gestalt eines in eine Kammer einführbaren, gegen die Flansche

0202604

abgestützten Klotzes ausgebildet, der wenigstens eine Gewindebohrung für eine das Spannelement bildende Spannschraube enthält.

Um sicherzustellen, daß die den Ausleger bildende Profilschiene immer in der richtigen Ausrichtung, d.h. ohne Verkantung, an dem zugeordneten U-förmigen Halteglied befestigt ist, und um damit die Montage weiter zu erleichtern, kann das Halteglied eine mit dem Ausleger zusammenwirkende Verdrehsicherungseinrichtung aufweisen. Zu diesem Zwecke ist es vorteilhaft, wenn das Halteglied auf seiner Rückseite als Verdrehsicherung eine Längsnut aufweist, gegen deren Seitenwände die den Ausleger bildende Profilschiene seitlich abstützbar ist.

Die den Ausleger bildende Profilschiene kann an sich jede mit Rücksicht auf die geforderte Belastbarkeit etc. zweckentsprechende Profilgestalt haben. Von besonderem Vorteil ist es dabei, wenn die den Ausleger bildende Profilschiene im wesentlichen ein T-Profil aufweist.

Außerdem kann die den Ausleger bildende Profilschiene einen über ihre Länge durchgehenden geschlossenen Kanal aufweisen, in den stirnseitig ein das Halteglied durchdringender Schraubenbolzen einschraubbar ist. Dadurch wird erreicht, daß bei beliebigem Ablängen der Profilschiene an ihrer Stirnfläche immer eine von dem Kanal gebildete Bohrung zur Aufnahme des Schraubenbolzens vorhanden ist.

Der Kanal kann in einem angeformten strangartigen Bereich größeren Durchmessers ausgebildet sein, der an dem Steg der T-Profilschiene im Abstand von deren Flansch angeordnet ist und damit zur Erhöhung der Biegesteifigkeit und Belastbarkeit des Auslegers beiträgt.

Bei aus leicht verformbarem Material, bspw.Leichtmetall, Bronze oder Kunststoff bestehender Profilschiene braucht in den eine glatte Innenwand aufweisenden Kanal an der Verbindungsstelle mit dem Halteglied kein Gewinde eingeschnitten zu werden. Es ist ohne weiteres möglich, einen Schraubenbolzen mit einem selbstschneidenden Gewinde einzudrehen. Andererseits kann die Anordnung aber auch derart getroffen sein, daß der geschlossene Kanal im Bereiche seiner Innenwand angeformte Längsrippen aufweist, die es gestatten, eine normale Maschinenschraube ohne vorhergehendes Schneiden eines Gewindes einzudrehen.

Die den Ausleger bildende Profilschiene kann auf ihrer Oberseite mit Vorteil wenigstens einen sich über die Länge erstreckenden nutenartigen Schraubkanal aufweisen, der es ermöglicht, eine auf die Aufleger aufgelegte leiterförmige Kabelauflage mittels in den Schraubkanal eingedrehter Befestigungsschrauben an jeder beliebigen Stelle zu fixieren, ohne dazu eigene Bohr- oder Gewindeschneidarbeiten vornehmen zu müssen. Um die Verwendung normaler Maschinenschrauben als Befestigungsschrauben zu ermöglichen, kann der Schraubkanal im Bereiche seiner Seitenwände mit vorstehenden Längsrippen ausgebildet sein.

0202604

Der Schraubkanal ist zweckmäßigerweise direkt an dem den geschlossenen Kanal enthaltenden strangartigen Bereich angeformt, so daß die Verbindungsstelle zwischen dem Ausleger und dem zugeordneten U-förmigen Halteglied in unmittelbare Nähe der Auflagefläche gerückt ist. Schließlich kann in den Schraubkanal auch eine Abdeckleiste, bspw. aus Kunststoff, eingesetzt sein, wenn auf die Ausleger Kabel unmittelbar aufgelegt werden sollen und die Gefahr besteht, daß die seitlichen Randkanten des Schraubkanals die empfindliche Kabelumhüllung beeinträchtigt.

In der Zeichnung ist ein Ausführungsbeispiel des Gegenstandes der Erfindung dargestellt. Es zeigen:

Fig. 1 eine Kabelpritsche gemäß der Erfindung, in perspektivischer Darstellung ind im Ausschnitt,

Fig. 2 die Kabelpritsche nach Fig. 1, in einer Draufsicht und im Ausschnitt, unter Veranschaulichung einer auf die Ausleger aufgelegten leiterförmigen Kabelauflage, in einem anderen Maßstab,

Fig. 3 das U-förmige Halteglied der Kabelpritsche nach Fig. 2, in perspektivischer Darstellung und in einem anderen Maßstab, und

Fig. 4 die den Ausleger der Kabelpritsche nach Fig. 1 oder 2 bildende Profilschiene in perspektivischer Darstellung und im Ausschnitt, sowie in einem anderen Maßstab.

- 8 -

0202604

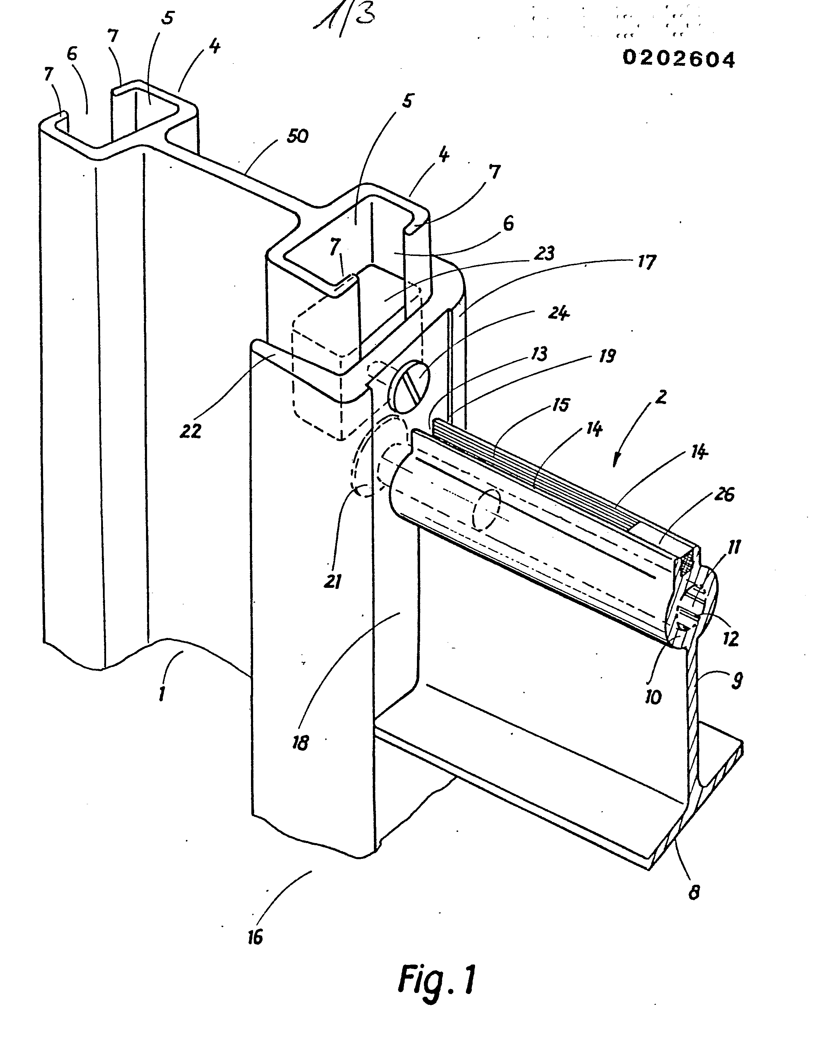

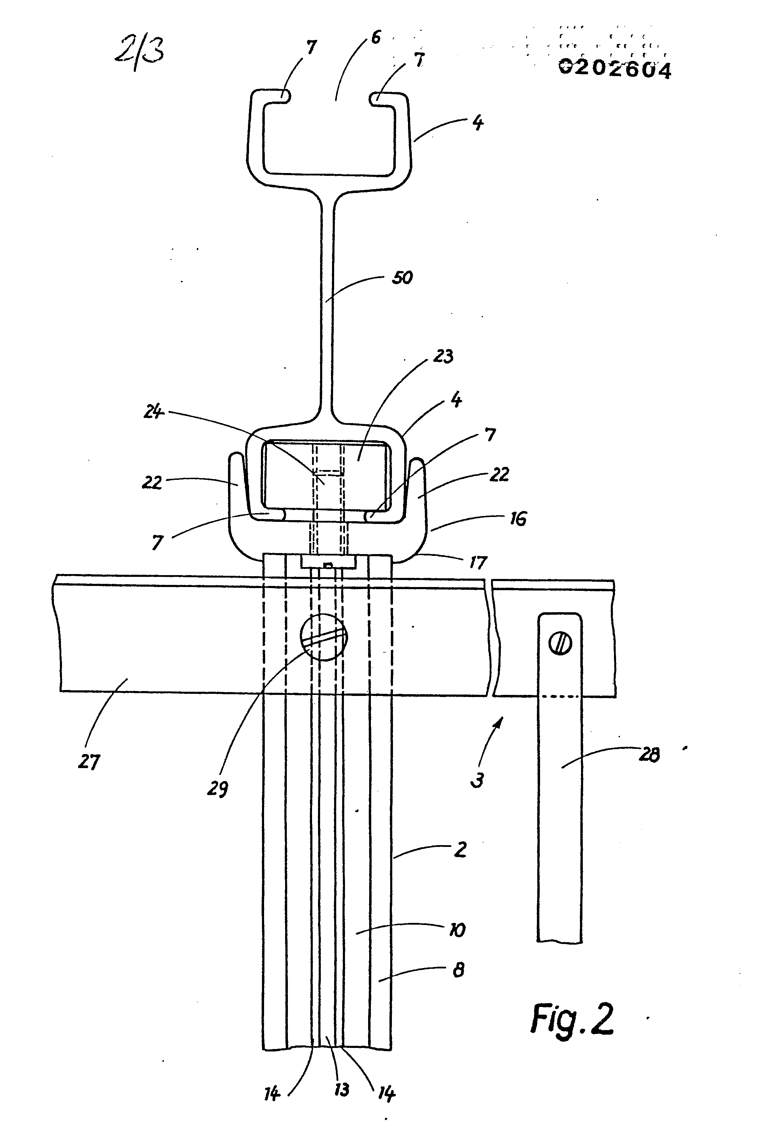

Die in den Fig. 1,2 im Ausschnitt dargestellte Kabelpritsche, die auch als Kabelträger dienen kann, besteht aus einer Anzahl vertikaler Stiele 1 und an diesen stufenlos verstellbaren sowie festklemmbaren horizontalen Auslegern 2, die zur Aufnahme von nicht weiter dargestellten Kabeln, Rohren oder dergl. oder einer leiterförmigen Kabelauflage 3 eingerichtet sind, von der in Fig. 2 ein Ausschnitt veranschaulicht ist.

Jeder Stiel 1 ist in Gestalt einer auf dem Boden aufgestellten oder an einer Wanddecke oder einem Träger etc. befestigten Profilschiene ausgebildet, die zwei parallele Gurte 4 aufweist, welche durch einen symmetrisch angeordneten Steg 50 miteinander verbunden sind und von denen jeder eine im Querschnitt etwa rechteckige, sich über die gesamte Länge erstreckende Kammer 5 enthält. In jede der Kammern 5 führt ein über die Länge durchgehender Längsschlitz 6, der beidseitig von zwei in der gleichen Ebene liegenden Flanschen 7 begrenzt ist.

Die Profilschiene ist aus einem extrudierbaren Material, bspw. Leichtmetall oder Kunststoff, stranggepreßt. Sie kann in einer alternativen Ausführungsform auch lediglich einen Gurt 4 aufweisen oder mit einer anderen Flanschgestaltung ausgebildet sein.

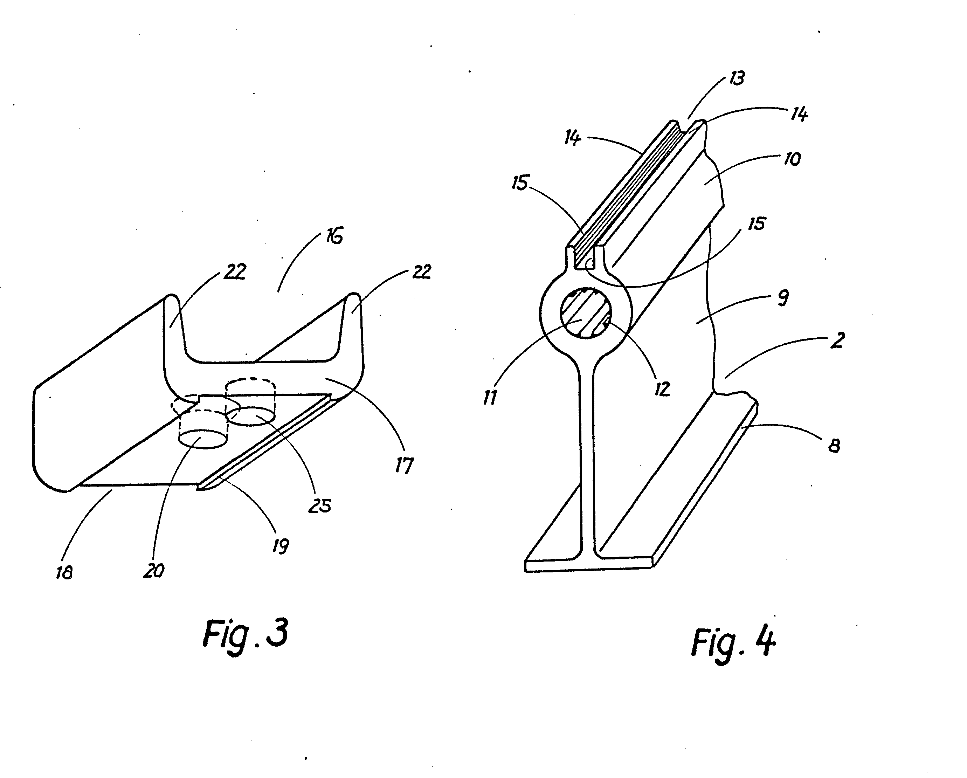

Jeder der Ausleger 2 ist ebenfalls durch eine aus einem entsprechenden extrudierbaren Material stranggepreßte Profilschiene gebildet, die im wesentlichen ein T-Profil aufweist. An einem querverlaufenden Flansch 8 dieser Profilschiene ist mittig ein vertikaler Steg 9 angeformt, der auf der dem Steg 8 gegenüberliegenden Seite in einen im Querschnitt im wesentlichen zylindrischen, strangartigen Bereich 10 größeren Durchmessers übergeht. In dem strangartigen Bereich 10 ist,symmetrisch zu dem Steg 9 sich über die gesamte Länge der Profilschiene erstreckend,ein durchgehender,geschlossener, zylindrischer Kanal 11 ausgebildet, der im Bereiche seiner Innenwand angeformte Längsrippen 12 (Fig. 1,4) aufweist.

Auf der Oberseite der einen Ausleger 2 bildenden Profilschiene ist ein sich über die Länge der Profilschiene erstreckender nutenartiger Schraubkanal 13 ausgebildet, der von zwei unmittelbar an den strangartigen Bereich 10 anschließenden, angeformten, parallelen Seitenwänden 14 begrenzt ist. Der Schraubkanal 13 trägt auf der Innenseite seiner Seitenwände 14 angeformte, parallel verlaufende Längsrippen 15.

Zur Verbindung dieser einen Ausleger 2 bildenden Profilschiene mit dem zugeordneten Stiel 1 dient ein Halteglied 16, das in der insbesondere aus den Fig. 1 - 3 ersichtlichen Weise in Gestalt eines U-förmigen Bügels 17 ausgebildet ist. Auch das Halteglied 16 ist aus einem extrudierbaren Material der erwähnten Art stranggepreßt; die einzelnen Bügel 17 sind von einer stranggepreßten U-förmigen Profilschiene einfach in der entsprechenden Länge abgetrennt.

0202604

Auf der Rückseite des Bügels 17 ist eine über die Länge durchgehende, symmetrisch angeordnete Längsnut 18 vorhanden, in die bei der Montage eine den Ausleger 2 bildende Profilschiene in der aus Fig. 1,2 ersichtlichen Weise derart eingeschoben ist, daß sie mit ihren Seitenwänden 19 seitlich an dem Flansch 8 anliegt und für den Ausleger 2 eine Verdrehsicherung bildet. In die Längsnut 18 mündet eine durchgehende Bohrung 20 des Bügels 17, in die eine Senkkopfschraube 21 eingesetzt ist, die in den geschlossenen Kanal 11 des stumpf anschließenden Auslegers 2 eingeschraubt ist, so daß dieser starr mit dem Bügel 17 verbunden ist. Die Längsrippen 12 des geschlossenen Kanales 11 gestatten es dabei, die als normale Maschinenschraube ausgebildete Senkkopfschraube 21 in den Kanal 11 einzuschrauben, ohne in diesen vorher ein Gewinde einzuschneiden. Alternativ könnten die Längsrippen 12 auch weggelassen und eine Senkkopfschraube 21 mit einem selbstschneidenden Gewinde verwendet werden.

Der auf diese Weise mit dem durch den Bügel 17 gebildeten Halteglied 16 starr verbundene Ausleger 2 ist in der Weise an dem Stiel 1 befestigt, daß das Halteglied 16 mit seinen beiden Bügelschenkeln 22 den zugeordneten Gurt 4 seitlich übergreifend auf den Stiel 1 aufgesetzt ist. Der Abstand der leicht konisch konvergierenden Innenflächen der beiden Schenkel 22 entspricht dabei den Außenabmessungen des Gurtes 4, derart, daß der Bügel 17 verkantungsfrei auf dem Gurt 4 sitzt, wobei dessen beide Flansche 7 leicht aufeinander zu gedrückt werden können.

In die zugeordnete Kammer 5 ist ein in Gestalt eines parallelflächig begrenzten Klotzes 23 ausgebildetes Klemmstück eingeschoben, dessen Querschnittsabmessungen etwa jenen der Kammer 5 entsprechen und das ebenfalls durch einen entsprechend abgelängten Abschnitt einer aus einem extrudierbaren Material stranggepreßten Schiene oder Profilstange gebildet sein kann. In eine entsprechende Gewindebohrung des Klotzes 23 ist eine ein Spannelement bildende Spannschraube 24 eingeschraubt, die durch den Längsschlitz 6 nach außen ragt und sich durch eine zugeordnete Durchgangsbohrung 25 (Fig. 3) des das Halteglied 16 bildenden Bügels 17 erstreckt.

Bei gelöster Spannschraube 24 kann das Halteglied 16 mit dem an ihm befestigten Ausleger 2 auf dem Stiel 1 stufenlos verschoben werden; in der jeweils gewünschten Höhenlage wird es durch einfaches Festziehen der Spannschraube 24 über den zwischen den Schenkeln 22 liegenden Klotz 23 mit den Flanschen 7 verklemmt.

Auf die so fixierten horizontalen Ausleger 2 können Rohre oder Kabel unmittelbar aufgelegt werden. Wenn bei Kabeln eine Beschädigung der empfindlichen Kabelmäntel zu befürchten ist, kann in die Schraubnut 13 ein Abdeckstreifen 26 eingelegt sein, von dem in Fig. 1 lediglich ein Stück veranschaulicht ist und der mindestens die Höhe der Seitenwände 14 aufweist. Der Abdeckstreifen 26 besteht zweckmäßigerweise aus Kunststoffmaterial.

Wird auf die Ausleger 2 eine aus Längsholmen 27 in Gestalt von Winkelschienen sowie aus daran befestigten Querstreben 28 bestehende Kabelauflage 3 aufgelegt (Fig.2), so kann diese ohne weiteres lagefest auf den Auslegern 2 fixiert werden. Dies geschieht mit in entsprechende Bohrungen der Längsholme 27 eingesetzte Schrauben 29, die mit ihrem Gewindeteil in die Schraubnut 13 ragen und mit deren Seitenwänden 14 verschraubt sind. Die Schrauben 28 können an jeder beliebigen Stelle der Längserstreckung der Schraubnut 13 eingeschraubt werden, wobei deren Längsrippen 15 es gestatten, normale Maschinenschrauben ohne vorheriges Gewindeschneiden zu benutzen. Insbesondere bei innen glatten Seitenwänden 14 können auch selbstschneidende Schrauben 29 verwendet werden.

Schließlich ist noch zu erwähnen, daß die Kabelpritsche bzw. ihre Elemente auch aus Stahl bestehen können.

0202604

Patentansprüche:

1. Kabelpritsche oder -träger, bestehend aus vertikalen, als Profilschienen mit wenigstens einem über die Länge durchlaufenden Flansch ausgebildeten Stielen und aus an diesen stufenlos verstellbaren und festklemmbaren horizontalen Auslegern, die zur Aufnahme von Kabeln oder dergl. oder einer leiterförmigen Kabelaufnahme eingerichtet sind und von denen jeder auf seiner dem Stiel zugewandten Stirnseite ein den Stiel teilweise umgreifendes Halteglied trägt, das mittels eines zugeordneten Klemmstückes und eines Spannelementes mit dem Stiel verklemmbar ist, dadurch gekennzeichnet, daß das Halteglied (16) als ein im Querschnitt im wesentlichen U-förmiger Bügel (17) ausgebildet ist, der mit seinen beiden Schenkeln (22) den Stiel (1) beidseitig umgreifend auf diesen aufsetzbar und an diesem geführt ist und an dem auf der den Schenkeln (22) abgewandten Seite eine den Ausleger (2) bildende Profilschiene stumpf anschließend befestigt ist und daß das Klemmstück (23) zwischen den beiden Schenkeln (22) liegend mit dem Flansch (7) des Stiels (1) verklemmbar ist.

2. Kabelpritsche oder -träger nach Anspruch 1, dadurch gekennzeichnet, daß zumindest die Ausleger (2) und die Halteglieder (16) aus einem extrudierbaren Material bestehen und stranggepreßt sind.

3. Kabelpritsche oder -träger nach Anspruch 2, dadurch gekennzeichnet, daß das extrudierbare Material ein Leichtmetall oder ein Kunststoff ist.

4. Kabelpritsche oder -träger nach Anspruch 2 oder 3, dadurch gekennzeichnet, daß die Stiele (1) aus einem extrudierbaren Material bestehen und stranggepreßt sind.

5. Kabelpritsche oder -träger nach Anspruch 1, dadurch gekennzeichnet, daß der Stiel (1) als Hohlprofil mit wenigstens einer über die Länge durchlaufenden Kammer (5) ausgebildet ist, in die ein Längsschlitz (6) führt und daß die Kammer (5) des Stieles (1) vorzugsweise im wesentlichen rechteckig ist und der Längsschlitz (6) durch zwei in einer gemeinsamen Ebene liegende Flansche (7) begrenzt ist.

6. Kabelpritsche oder -träger nach Anspruch 5, dadurch gekennzeichnet, daß der Stiel (1) zwei durch einen Steg (50) miteinander verbundene Gurten (4) aufweist, von denen jeder eine Kammer (5) enthält.

7. Kabelpritsche oder -träger nach Anspruch 5 oder 6, dadurch gekennzeichnet, daß das Klemmstück in Gestalt eines in eine Kammer (5) einführbaren, gegen die Flansche (6) abgestützten Klotzes (23) ausgebildet ist, der wenigstens eine Gewindebohrung für eine das Spannelement bildende Spannschraube (24) enthält.

8. Kabelpritsche oder -träger nach einem der vorhergehenden Ansprüche, dadurch gekennzeichnet, daß das Halteglied (16) eine mit dem Ausleger (2) zusammenwirkende Verdrehsicherungseinrichtung (18, 19) aufweist.

9. Kabelpritsche oder -träger nach Anspruch 8, dadurch gekennzeichnet, daß das Halteglied (16) auf seiner Rückseite als Verdrehsicherung eine Längsnut (18) aufweist, gegen deren Seitenwände (19) die den Ausleger (2) bildende Profilschiene seitlich abstützbar ist.

10. Kabelpritsche oder -träger nach einem der vorhergehenden Ansprüche, dadurch gekennzeichnet, daß die den Ausleger (2) bildende Profilschiene im wesentlichen ein T-Profil aufweist.

11. Kabelpritsche oder -träger nach einem der vorhergehenden Ansprüche, dadurch gekennzeichnet, daß die den Ausleger (2) bildende Profilschiene einen über ihre Länge durchgehenden geschlossenen Kanal (11) aufweist, an dem stirnseitig ein das Halteglied (16) durchdringender Schraubenbolzen (21) einschraubbar ist.

12. Kabelpritsche oder -träger nach den Ansprüchen 10 und 11, dadurch gekennzeichnet, daß der Kanal (11) in einem angeformten strangartigen Bereich (10) größeren Durchmessers ausgebildet ist, der an dem Steg (9) der T-Profilschiene im Abstand von deren Flansch (8) angeordnet ist.

13. Kabelpritsche oder -träger nach Anspruch 11 oder 12, dadurch gekennzeichnet, daß der geschlossene Kanal (11) im Bereiche seiner Innenwand angeformte Längsrippen (12) aufweist.

14. Kabelpritsche oder -träger nach einem der vorhergehenden Ansprüche, dadurch gekennzeichnet, daß
die den Ausleger (2) bildende Profilschiene auf
ihrer Oberseite wenigstens einen sich über ihre
Länge erstreckenden nutenartigen Schraubkanal (13)
aufweist.

15. Kabelpritsche oder -träger nach en Ansprüchen 12
und 13, dadurch gekennzeichnet, daß der Schraubkanal (13) an dem strangartigen Bereich (10) angeformt ist.

16. Kabelpritsche oder -träger nach Anspruch 14 oder
15, dadurch gekennzeichnet, daß der Schraubkanal
(13) im Bereiche seiner Seitenwände (14) vorstehende
Längsrippen (15) aufweist.

17. Kabelpritsche oder -träger nach einem der Ansprüche
14 - 16, dadurch gekennzeichnet, daß in den Schraubkanal (13) eine Abdeckleiste (26) eingesetzt ist.

1/3

0202604

Fig.1

0202604

Fig.2

Fig. 3

Fig. 4

**EUROPÄISCHER RECHERCHENBERICHT**

Nummer der Anmeldung

| | **EINSCHLÄGIGE DOKUMENTE** | | EP 8610587.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | <u>DE - A2 - 1 154 543</u> (POHL)<br>* Fig. 4; Anspruch 1 *<br>-- | 1 | H 02 G 3/04 |
| A | <u>AT - B - 263 895</u> (RIETH & CO.)<br>* Anspruch 1; Fig. 2 *<br>-- | 1 | |
| D,A | <u>DE - B - 1 162 444</u> (BADE)<br>* Fig. 4 *<br>---- | 1 | |
| | | | **RECHERCHIERTE SACHGEBIETE (Int. Cl.4)**<br><br>H 02 G 3/00 |

Der vorliegende Recherchenbericht wurde für alle Patentansprüche erstellt.

| Recherchenort | Abschlußdatum der Recherche | Prüfer |
|---|---|---|
| WIEN | 28-08-1986 | SCHMIDT |